# EUROPEAN PATENT SPECIFICATION

(11) **EP 2 069 875 B1**
(45) Date of publication and mention of the grant of the patent: **14.12.2011**
(21) Application number: 07838338.7
(22) Date of filing: 17.09.2007
(51) Int. Cl.: G05D 11/00, G01G 17/06

(54) **VISCOUS MATERIAL FEED SYSTEM AND METHOD**
SYSTEM UND VERFAHREN FÜR DIE ZUFÜHRUNG VON VISKOSEM MATERIAL
SYSTÈME ET PROCÉDÉ D'ALIMENTATION EN MATIÈRE VISQUEUSE

(30) Priority: 15.09.2006 US 532334
(43) Date of publication of application: 17.06.2009
(73) Proprietor: Momentive Performance Materials Inc., Wilton, CT 06897-4122 (US)
(72) Inventor: STATON, Jennifer, L., Clifton Park, NY 12065 (US); BAYLY, Hal, Mechanicville, NY 12881 (US); KNOX, Roger, Clifton Park, NY 12065 (US)
(74) Representative: Gille Hrabal Struck Neidlein Prop Roos
(86) International application number: PCT/US2007/020115
(87) International publication number: WO 2008/033553

(56) References cited:
- US-A- 5 198 171
- US-A- 5 797 516
- US-A1- 2003 121 561

## Description

### BACKGROUND OF THE INVENTION

The invention relates to a viscous material system and method and metering assembly and method, in particular for supplying an organopolysiloxane gum or other viscous material from successively loaded drums to a continuous compounding system.

In a compounding system, a material is fed to a processing line where feed is mixed and additives are injected in proportions to produce a customized product. This system requires precise and reliable dosing and feed operations to achieve uniform products with narrow tolerance properties. Accurately metering the material in a feed step can be critical to proper system operation.

However, it is difficult to separate an accurate quantity of a viscous material from a bulk of the material. Accurate separation is difficult because of slow response of the viscous material to a change in feed rate and because of the difficulty in separating a metered aliquot of the viscous material from a bulk of the material. The material may be resistant to pouring or if it can be poured, pour rate is extremely slow. A viscous material may exhibit high levels of adhesion or tendency to stick to other materials and/or cohesion or a tendency to remain stuck to itself and therefore not separable. The viscous material may be shear thickening, exhibiting increasing viscosity as shear on the fluid is increased and therefore becoming increasingly resistant to flow as shear is increased. It is difficult to feed accurate quantities of such materials so that an amount in a process can be controlled.

Accordingly, there is a need in the art to facilitate separating difficult-handling viscous material. Also, there is a need to accurately cut defined quantities of such material from a bulk quantity, regardless of the form of the bulk quantity, and there is a need to be able to charge the viscous material to a processing system.

US 5, 198, 171 discloses a silicone gum processing system comprising a silicone gum compounding system, wherein the discharging part is provided with a rotating knife such that the ingredient squeezed out in the form of columns through the grating can be cut into pellets

### Brief description of the invention

The invention provides an improved system and method to cut and meter difficult-handling material to a processing system.

In a first embodiment, the invention is a silicone gum feed system, comprising: a drum press located on a loss of weight scale; a feed tube that receives material expressed from a drum by the drum press; a dicing apparatus that meters material from the feed tube to a processing system according to loss of weight sensed by the scale; and a controller with a set of instructions to store an initial weight, monitor a continuing weight, determine weight of silicone gum fed to the processing system according to a difference between the initial weight and the monitored weight and increasing the dicing rate of the moving material to decrease each diced portion quantity as the set point range of the material feed session is approached.

In another embodiment, the invention is a method of using a material extractor apparatus in a silicone gum feed system for controlling a viscous material feed to a processing system, comprising: establishing a material feed session set point range; feeding a viscous material in the session by dicing a steadily moving material into a portion that drops sequentially into the processing system; monitoring a session total of material dropped into the processing system; comparing the session total of material to the session set point range; increasing a dicing rate of the moving material to decrease each diced portion quantity as the session set point range is approached; and terminating the material feed of the session when the total material is within the session set point range.

### BRIEF DESCRIPTION OF THE DRAWING

FIG. 1. FIG. 2 and FIG. 3 are schematic representations of a material processing system;

FIG. 4 and FIG. 5 are perspective views of a drum press; and

FIG. 6 is a cut away view of a section of a drum press.

### DETAILED DESCRIPTION OF THE INVENTION

The invention relates to the handling of a viscous material such as a silicone gum. A silicone or polysiloxane or organopolysiloxane has the chemical formula [R₂SiO]ₙ, where R = organic groups such as methyl, ethyl, and phenyl. These materials typically comprise an inorganic silicon-oxygen backbone (...-Si-O-Si-O-Si-O-...) with attached organic side groups, which can be four-coordinate. In some cases organic side groups can be used to link two or more of these -Si-O- backbones together.

By varying the -Si-O- chain lengths, side groups, and crosslinking, silicones can be synthesized with a wide variety of properties and compositions. They can vary in consistency from liquid to gel to rubber to hard plastic. Silicone rubber or silicone gum is a silicone elastomer, typically having high temperature properties. Silicone rubber offers resistance to extreme temperatures, being able to operate normally from minus 100°C to plus 500°C. In such conditions tensile strength, elongation, tear strength and compression set can be superior to conventional rubbers.

A silicone gum can be extruded ormolded into custom shapes and designs such as tubes, strips, solid cord or custom profiles within size restriction specified by a manufacturer. Cord can be joined to make "O" Rings and extruded profiles can also be joined to make up seals.

It is desirable to provide a viscous feed metering system that accurately and efficiently processes viscous materials such as silicone gum for use in various applications. However, these materials can be highly resistant to flow, highly adhering, highly cohering, and/or shear thickening and consequently very difficult to handle. Accuracy of a packaging process and/or accuracy of a process of obtaining a defined quantity of such material, for example in a continuous process is costly when substantial time is required for cutting or separating of a quantity of the material from a lager quantity. Also, it is costly and wasteful to have to clean the processing equipment on a frequent basis when the fluid material sticks to a cutting tool or instrument; also, it is costly, and disadvantageous when an incorrect amount of material is used in a downstream process which uses the material.

A viscous feed metering system can require emptying material such as silicone gum from barrels or similar containers. Many of these processing systems produce highly customized products to particular applications. Producing a customized product requires precise adjustment of product proportions, requiring precise feed of materials. However, precise feed of a viscous material is difficult. The material must somehow be diced into measurably aliquots that can be controlled to provide a target feed quantity.

Sometimes a cutting tool, such has a knife, blade or scissors is used to dice portions of a viscous material from a bulk or other quantity supply. For example, a feed portion of viscous material can be cut from a large bulk mass, from a pulled relatively thin cross-sectional string or from a generally cylindrical-shape of the viscous material. One disadvantage of trying to move a blade or the like through a viscous material is the relatively large amount of force that may be required and the time and machinery required to apply such force. Another disadvantage to moving a blade or the like through the fluid material is the adherence of the material to the blade, especially if the fluid material is sticky (highly adhering). The cutting tool may require frequent cleaning to remove accumulation of the fluid material that has stuck thereto. Such accumulation of fluid material on the cutting tool may be particularly rapid where the fluid is cohesive, being highly self adhering. Also, as the material sticks to the cutting tool, the force and work required to move the cutting tool through the material further increases.

The invention provides a system and method to dice and feed difficult to handle viscous materials. Features of the invention will become apparent from the drawings and following detailed discussion, which by way of example without limitation describe preferred embodiments of the invention.

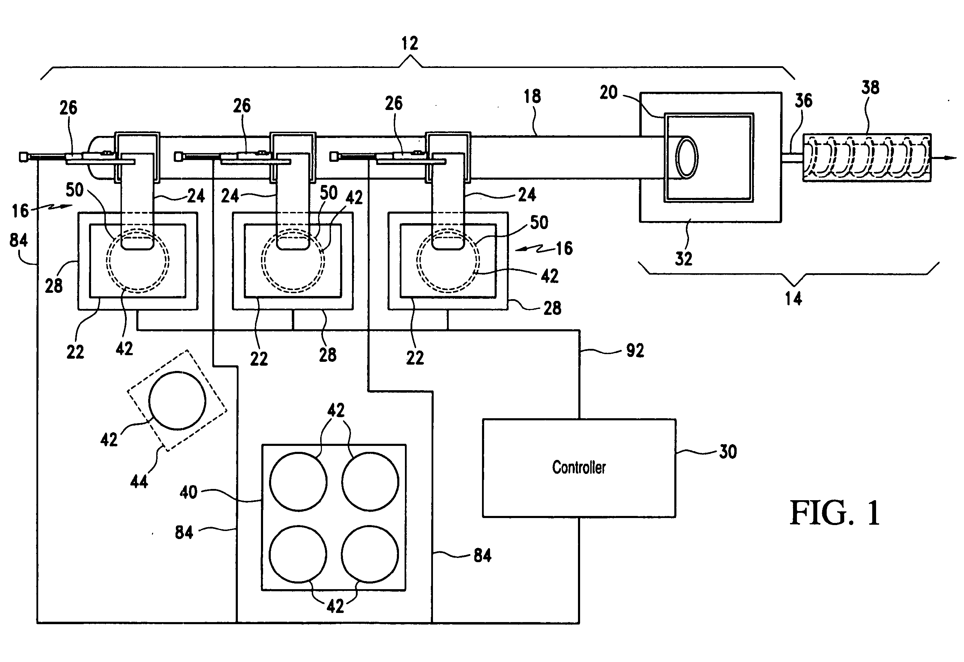

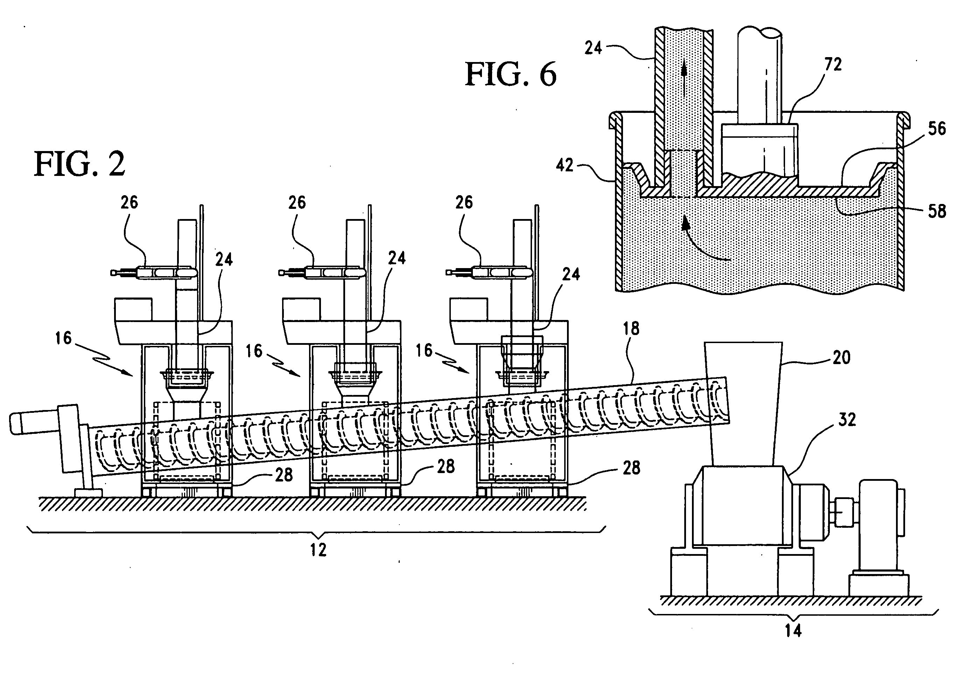

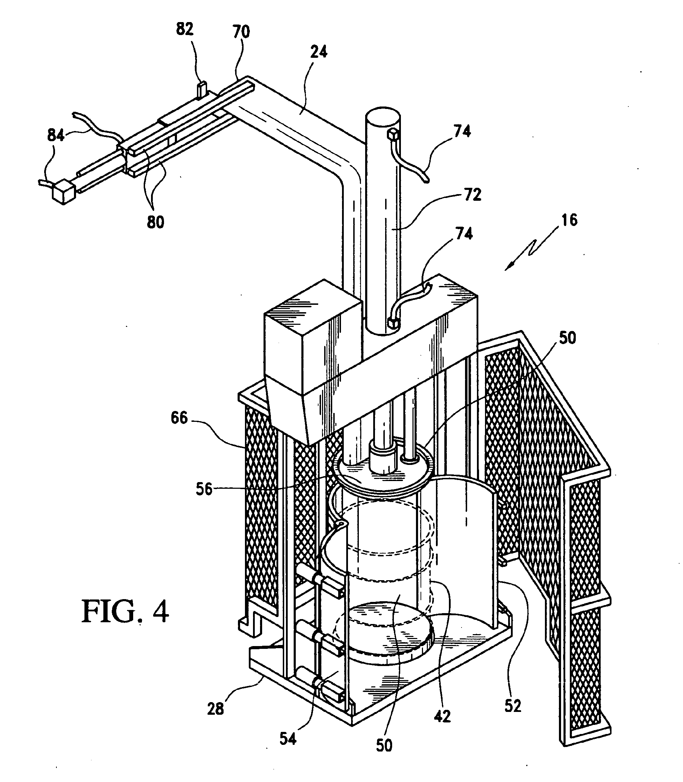

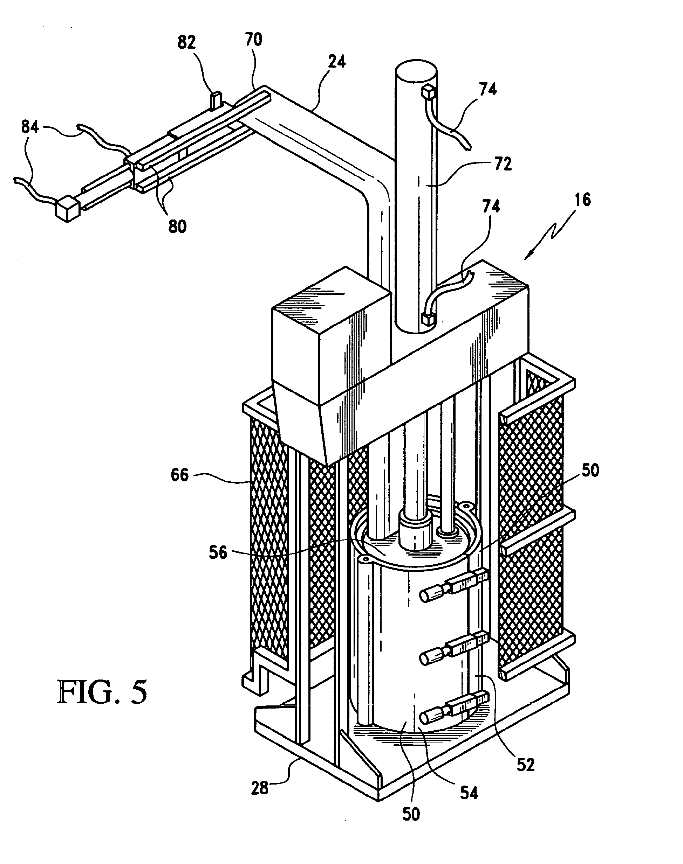

A material feed system and method for evacuating material from a container for feed to a processing system is shown in the drawings as a process to compound silicone rubber (silicone gum) into a base for forming articles. In the drawings, FIG. 1 is a schematic top view representation and FIG. 2 is a schematic side view representation of a material processing system 10 showing an integrated feed system 12 and compounding system 14. The feed system 12 includes a material extractor apparatus (MEA) 16, conveyor 18 and chute 20. FIG. 4 and FIG. 5 are detailed elevation views of the MEA 16 and FIG. 6 is a cut away side sectional view of a section of the MEA 16. The MEA 16 includes container evacuator 22, feed tube 24, dicing apparatus 26 and floor scale 28. The integrated feed system 14 is controllably connected to controller 30. FIG. 6 is a schematic side view of compounding system 14. As shown in FIG. 1, FIG. 2 and FIG. 3, compounding system 14 includes mixer 32, roll mill 34, conveyor belt 36 and compounder 38.

The MEA 16 serves to express the viscous material from a container to the compounding system 14. In typical prior art operations, 55-gallon steel drums from a pallet are dumped into totes and the totes (approx. 80 pounds each) are dumped into a Banbury mixer. However, manually maneuvering drums from pallets can cause back and shoulder strains and injuries. In a preferred compounding operation of the invention with respect to FIG. 1, FIG. 2 and FIG. 3, operation commences with delivery of a pallet 40 of four drums 42 of gum. While the container can be any material holding enclosure, the drawings embodiment is a feed system including a method of evacuating a silicone gum-containing drum. A suitable drum 42 in the embodiment has full openable ends and has a cylindrical wall of steel, fiberboard or other material suitable for transporting a silicone gum material. The drum 42 has opposite ends, each of which is openable to accommodate a movable plunger at one end as hereinafter described.

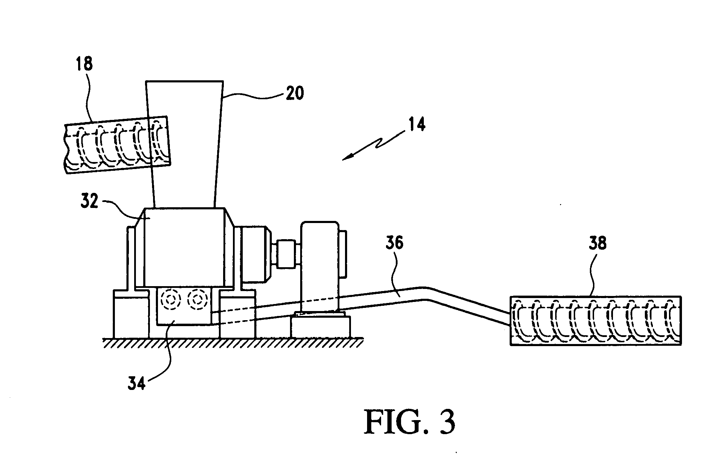

The material in the drums 42 may be identical or it may be of a variety of physical properties such as viscosity. The drums 42 are removed from the pallet 40 one by one by drum hauler 44 such as from Easy Lift Equipment Co., Inc., 2 Mill Park Court, Newark, Delaware 19713. The lid of each of three drums 42 is removed and each of the drums 42 is loaded by the hauler 44 into a respective container evacuator 42, which may be a Schwerdtel S 6-F drum press. Use of the drum hauler 44 eliminates ergonomic risks associated with lifting and handling the heavy drums 42. The silicone gum is then forced from each drum in measured aliquots by the MEA 16 into the conveyor 18. In the drawings embodiment, the MEA 16 comprises a container evacuator 22, feed tube 24 and dicing apparatus 26. The container evacuator 22 can be a drum press, which is a device that evacuates viscous or compacted contents from a drum. As illustrated in FIG. 2 and FIG. 3, the container evacuator 22 is a press that comprises a substantially cylindrical chamber 50 with hinged closures 52 and 54 for securing a drum 42 removably within the chamber 50. The chamber 50 and hinged closures 52 and 54 securely cradle the drum 42 during a material extracting operation. A disc-shaped platen 56 fits into the chamber 50 with a flat driving surface 58 oriented perpendiculars to the longitudinal axis of the chamber 50 and correspondingly perpendicular to the longitudinal axis of a drum 42 held within the chamber 50.

The operation of feed system 12 can be described with reference to FIG. 1, FIG. 2, FIG. 4, FIG. 5 and FIG. 6. In operation, the press closures 52 and 54 are manually unlatched by activating clamps and opening closures 52 and 54. The drum hauler 44 is used to load a first drum 42 into the press cavity 60. The drum 42 is secured by a locator ring 62 at the base 64 of the chamber 50. The right closure 52 is first closed then the left closure 54 by engaging a door switch by an actuator (not shown). The cage chamber 66 is closed and the actuator secures the press closures 52 and 54 at the commencement of a batch system cycle. The press closures 52 and 54 take pressure of the hydraulic system from a drum 42 that may be thin-walled.

Each MEA 16 includes the container evacuator 22, feed tube 24 and dicing apparatus 26 and each is set on a respective floor scale 28. In each MEA 16, the feed tube 24 is connected through the disc shaped platen 56 to communicate with the press cavity 60. The platen 56 is driven by hydraulic plunger 72. When a batch is set up by loading each chamber 50 of the feed system 12 battery, an operator can initiate a system cycle by controller 30 touch screen located at a work station. The controller 30 can be a microprocessor or computer or the like for controlling the MEA 16 as hereinafter described.

The operator can commence system operation at controller 30. When a cycle is activated by an operator, a plunger 72 of each container evacuator 22 of the battery shown in FIG. 1 is activated via control lines 74 (FIG. 4 and FIG. 5). Then, as the screw conveyor 18 starts turning, the press platen 56 with connected feed tube 24 is forced by hydraulically driven plunger 72 to travel down into the drum 42 interior. As further illustrated in FIG. 6, as platen 56 traverses the drum 42 longitudinal axis within the press cavity 60, drum contents are displaced upward into a connecting orifice 68 of the feed tube 24. As the platen 56 completes traversing the drum axis, all material is forced upward into the feed tube 24 to be eventually expelled from the feed tube discharge port 70.

The material is diced into small pieces by dicing apparatus 26 as it exits from the discharge port 70 to the conveyor18 to charge to compounding system 14. Dicing can be accomplished by various cutting mechanisms, including a cutting head disposed at an outlet end of the feed tube. For example, Brandl, US 5,797,516, incorporated hereto in its entirety discloses a cutting head formed by a knife that is detachably mounted in an axial direction and radial and tangential to the axial direction. The cutting head is rotatable relative to a feed tube about a common central longitudinal axis.

In the FIG. 4, FIG. 5 and FIG. 6 embodiment, the MEA 16 includes a dicing apparatus 26 located at discharge port 70. The dicing apparatus 26 includes rails 80 that secure cutting wire 82 to guide the wire 82 to cut material exiting the feed tube discharge port 70. The rails 80 secure the cutting wire 82 to traverse the feed tube 24 longitudinal axis at discharge port 70 when activated by controller 30 via lines 84 and 86.

The controller 30 of FIG. 1 illustrates an embodiment of the invention. Controller 30 is responsively connected to loss of weight scales 28 via lines 92 to sense loss of weight as material is expressed from the drums 42 to conveyor 18. The controller 30 computes a weight charged of material charged to the conveyor 18 by the difference between an initial weight of the MEA 16 and initially emplaced and full drum 42. In the embodiment of the drawings, the controller 30 can sense an initial total weight of all the MEAs 16 and emplaced full drums 42 of the MEA battery of for example, the three shown in FIG. 1. The controller 30 monitors the combined weight as material in the drums is evacuated to the conveyor 18. The controller 30 contemporaneously calculates a weight of material charged to the conveyor 18 and hence to the compounding system according to a difference between the initial total weight and contemporaneously sensed total weight.

The controller 30 also controls operation of dicing apparatus 26 according to the calculated charged material weight. Initially, the dicing apparatus 26 can be programmed to make cuts of about "football" sized material, for example to fit in a 14" inner diameter screw conveyor 18. Once a piece of material is cut from the feed tube discharge port 70, floor scale 28 senses a contemporaneous weight and feeds this signal back to the controller 30. When the controller 30 senses a contemporaneous weight signal and calculates that a total charged weight is within a specified range of total material to be charged (for example within 15 pounds of "set point") to the compounding system 14, the controller can signal the dicing apparatus 26 via lines 84 to increase cut frequently to produce smaller "diced" pieces. The smaller diced pieces at approach to set point permit improved control of feed to attain a charged material weight within a prescribed tolerance range, for example +/- 2 pounds for a batch.

As the drum 42 evacuation process is completed, door clamps of the hinged closures 52 and 56 open and a controller 30 Run Screen displays "NEW DRUM." A beacon light mounted on the container evacuator 22 turns yellow, indicating the drum 42 is ready to be changed. The chamber 50 hinged closures 52 and 56 open the hydraulic unit motor terminates. The door clamps are opened manually and the empty drum is removed, typically with the drum hauler. The press is reloaded with a drum the process repeated.

As material is charged from the presses to the screw conveyor, the conveyor is turning at low rpms to feed the material to the mixer. The screw is programmed to stop turning 90 seconds after the last press makes its last cut. We have determined this time to be adequate to clear all material from the conveyor.

Conveyor 18 transports and drops the silicone gum to chute 20,which drops the material into a material compounding system 14. In one silicone compounding process, a heat cured rubber (HCR) composition can be produced by kneading a high-viscosity polydiorganosiloxane, an inorganic filler and additives by means of a batch kneading machine such as the high intensity Banbury mixer 32 or a low intensity double arm dough mixer. In this process, silicone gum, inorganic filler, treating agents and additives are batch mixed until desired properties are obtained. In Kasahara et al., U.S. Pat. No. 5,198,171, a preconcentrate of silicone gum, inorganic filler and treating agents is formed by a high speed mechanical shearing mixer. The resulting premix is further compounded in a same-direction double screw extruder. A premix is formed in a first step wherein a silicone gum having a viscosity at 25° C. of 1X10⁵ cP or more, an inorganic filler and a treating agent are mixed in a high speed mechanical shearing machine to provide a flowable particulate mixture in which each ingredient is present in a substantially uniform, finely dispersed state. The flowable particulate mixture is then fed at a constant feed rate into a kneading and extruding machine that has two screws rotating in the same direction.

As the material exits from the end of the conveyor, it falls into a chute. It tumbles down the chute directly into the mixing chamber of a Banbury mixer where feed is mixed with filler and additives. In the FIGs. 1, 2 and 3 embodiment, the silicone gum drops through chute 20 to compounding system 14, which includes mixer 32 such as a Banbury, roll mill 34, conveyor belt 36 and compounder 38. The material dropped from chute 20 may be a feed of silicone gums of varying physical properties such as varying viscosity.

In the mixer 32 such as a Bepex Turbolizer, fumed silica, the silicone gum and a treating agent can be added to form a densified polymer/filler mass. After the gum feed is mixed it is dropped into the nip 46 of roll mill 34 where the material is rolled into a strip form. After a drop, the PLC (automatic system?) verifies that the mixer drop door has opened, then reclosed and is ready for feed. For any residual material that hangs in the chute, the "pusher" is programmed to sweep a few seconds after the conveyor stops. This serves to scrape down the chute, and ensure all material gets into the mixer to correctly formulate the batch.

The mill imparts a final mix to fully incorporate filler and to cool material. Then, the material is stripped from the mill a strip form. The strip form is fed by means of conveyor belt 36 into compounder 38, which may be an extruder. The compounder 38 serves to clean and form the material for packaging. The material can be packaged and boxed through an automated cut, weigh and packaging system.

The feed system and method of the invention can be used in conjunction with a process to compound a silicone rubber into a base for sealing compounds with additives such as pigments dosed to the rubber in appropriate quantities and mixed in large mixers or extruders. FIG. 11 illustrates an exemplary process wherein a filler such as fumed silica is continuously in situ treated and compounded with a silicone polymer such as a vinyl-terminated polydimethylsiloxane.

A heat cured rubber (HCR) comprises a high viscosity silicone polymer, an inorganic filler and various additives that aid processing or impart desired final properties to the composition. A vulcanizing agent or catalyst can be added and the composition heat cured to fabricate silicone rubber moldings such as gaskets, medical tubing and computer keypads. An HCR composition can be produced by kneading a high-viscosity polydiorganosiloxane, the inorganic filler and additives by means of a batch kneading machine such as a high intensity Banbury mixer or a low intensity double arm dough mixer. In this process, polydiorganosiloxane, inorganic filler, treating agents and additives are batch mixed until desired properties are obtained. In Kasahara et al., U.S. Pat. No. 5,198,171, a preconcentrate of polydiorganosiloxane, inorganic filler and treating agents is formed by a high speed mechanical shearing mixer. The resulting premix is further compounded in a same-direction double screw extruder. The premix is formed in a first step wherein a diorganopolysiloxane having a viscosity at 25° C of 1X10⁵ cP or more, an inorganic filler and a treating agent are mixed in a high speed mechanical shearing machine to provide a flowable particulate mixture in which each ingredient is present in a substantially uniform, finely dispersed state. The flowable particulate mixture is then fed at a constant feed rate into a kneading and extruding machine that has two screws rotating in the same direction.

The following Example is illustrative and should not be construed as a limitation on the scope of the claims.

### EXAMPLE

This EXAMPLE is a combined description of press experiments at Schwerdtel US headquarters (New Jersey), ProSys Corporation (Missouri), and at GE Silicones Waterford, NY. Experiments on the shaftless screw conveyor were conducted at GE Silicones Waterford using Martin Sprocket equipment.

A viscous material feed system as schematically illustrated in the drawings included a Schwerdtel S 6-F drum press mounted to Vishay BLH floor scale that measured material flow according to loss of weight. The Schwerdtel S--6F press included a hydraulic pressure driven cylinder and platen that drives a platen into the 55 gallon drum.

The feed system included a feed tube to receive material expressed from a drum by the press and a pneumatic solenoid operated cutting system that metered material from the feed tube to a 12" X 24' shaftless screw conveyor according to loss of weight sensed by the scale. The screw conveyor interfaced to a chute. The chute permitted material to fall via gravity directly to a Banbury mixer. Material remaining in the chute was cleared by a pneumatic pusher prior to each mix (GE design and fabrication). The system was controlled by operators at two (2) QuickPanel LM90 touch screens.

In operation, an operator first entered into set point into a system controller. The set point represented a target batch of silicone gum to be charged to a Banbury mixer, which was part of a silicone gum compounding system. A pallet of four (4) fifty-five (55) gallon drums of polymer (Viscosity Range 150,000 to 900,000 Poise) was placed on the drum carousel. The 55-gallon straight-sided steel drums were delivered by the carousel and one drum was loaded into the Schwerdtel S 6-F drum press using an Easy Lift Equipment Drum Hauler unit. The Schwerdtel S 6-F drum press was controlled by a GE Fanuc 90/30 PLC. Material was then displaced, from the drum to the feed tube by the hydraulic Schwerdtel gum press.

The operator pressed a START OR RESTRT BATCH button of the controller to commence operation. As the screw conveyor started turning, the hydraulically driven press platen commenced traveling down into the drum. As platen traversed the drum, drum contents were squeezed upward into the feed tube. As the platen completed traversing the drum axis, all material was forced upward into the feed tube. As material exited the feed tube, a pneumatic solenoid operated cutting system diced the material into pieces that then fell into a 12" X 24' shaftless screw conveyor to charge to a Banbury mixer.

A batch of material flow from conveyor to the Banbury mixer was measured by loss of weight detected by the Vishay BLH load cells. A combined weight of presses, feed tubes, cutting mechanisms and material-containing drums was registered by the control system as a first weight. The control system monitored a charged weight of silicone gum to the Banbury by registering progressing weight as silicone gum was pressed from the drums and expelled through the feed tubes and cutting systems. The control system displayed a differential between the first weight and registered progressive weights that represented a charged silicone gum weight. As the charged silicone gum weight was within 15 pounds of the set point, the

A system operator observed the differential weight and terminated the batch operation when the differential weight registered within a ±2 pound range of the set point, the pneumatic solenoid operated cutting system rate was increased to dice smaller aliquots of exiting material. The batch feed operation was terminated by the operator when the control system registered a charged silicone gum weight with 2 pounds of the set point.

The EXAMPLE illustrates control of material charge to a compounding system according to a feed system of the invention.

The invention includes changes and alterations that fall within the purview of the following claims. The foregoing examples are merely illustrative of the invention, serving to illustrate only some of the features of the present invention. For example, the invention includes a controller with a set of instructions: to refer to a look-up data base to determine a set point for a material to be charged to a compounding system; sensing an initial combined weight of a material extracting apparatus and a container with material; signaling commencement of the material extracting apparatus operation to evacuate the material from the container; sensing a progressing combined weight of the material extracting apparatus and the container with material; calculating a charged material weight according to a difference between the initial combined weight and the sensed progressing combined weight; and terminating the material extracting apparatus operation when a calculated charged material weight is within a specified range of the set point.

## Claims

1. A silicone gum feed system (12), comprising a material extractor apparatus (16) comprising:
a drum press located on a loss of weight scale;
o feed tube (24) that receives material expressed from a drum by the drum press;
a dicing apparatus (26) that meters material from the feed tube (24) to a processing system (10) according to loss of weight sensed by the scale; and
o controller (30) with a set of instructions to store an initial weight, monitor a continuing weight, determine weight of silicone gum fed to the processing system (10) according to a difference between the initial weight and the monitored weight and increasing the dicing rate of the moving material to decrease each diced portion quantity as the set point range of the material feed session is approached.

2. The silicone gum feed system (12) according to claim 1, wherein
the drum press comprises a chamber to hold the drum and a plunger axially and slidably accommodated within the chamber; or
the evacuator drum press comprises a chamber to hold a material filled drum and a plunger axially and slidably accommodated within the chamber to express material from the drum into the feed tube (24) that extends from the chamber with the dicing apparatus (26); or
the drum press comprises a chamber to hold the drum and a plunger comprising a piston driven platen that is axially and slidably accommodated within the chamber; or
the dicing apparatus (26) is located at discharge port of the feed tube (24) and comprises rails that slidably secure a cutting wire to traverse the feed tube (24) longitudinal axis at discharge port to cut material exiting the feed tube (24) discharge port; or
further comprising a controller (30) that activates a plunger axially and slidably within the drum press to express material from a drum held within the drum press; or further comprising a controller (30) with a set of instructions to (I) store an input value representing a material set point, (II) sense an initial combined weight of the material extracting apparatus and a drum with material; (III) sense a progressing combined weight of the material extracting apparatus and the drum with material as material is metered from the dicing apparatus (26); and (IV) calculate a material weight charged from the feed system (12) to a subsequent process according to a difference between the initial combined weight and the sensed progressing combined weight; or
further comprising a controller (30) with a set of instructions to (I) store on input value representing a material set point, (II) sense an initial combined weight of the material extracting apparatus and a drum with material; (III) sense a progressing combined weight of the material extracting apparatus and the drum with material as material Is metered from the dicing apparatus (26); (IV) calculate a material weight charged from the feed system (12) to a subsequent process according to a difference between the initial combined weight and the sensed progressing combined weight; and terminate the material extracting apparatus operation when a calculated charged material weight is within a specified range of the set point; or
further comprising a controller (30) with a set of instructions to (I) store an Input value representing a material set point, (II) sense an initial combined weight of the material extracting apparatus and a drum with material; (III) sense a progressing combined weight of the material extracting apparatus and the drum with material as material Is metered from the dicing apparatus (26); (IV) calculate a material weight charged from the feed system (12) to a subsequent process according to a difference between the initial combined weight and the sensed progressing combined weight; and (v) increasing the rate of metering of material by the dicing apparatus (26) when the calculated material weight charged is within a predetermined range of the set point; or
comprising a plurality of combinations of container evacuator (22), feed tube (24) and dicing apparatus (26).

3. The silicone gum feed system (12) according to claim 1, wherein the controller (30) contains a set of instructions: to (I) refer to a look-up data base to determine a set point for a material to be charged to a compounding system (14); (II) sense an initial combined weight of a material extracting apparatus and a drum with material; (III) signal commencement of operation of the material extracting apparatus to evacuate material from the drum; (IV) sense a progressing combined weight of the material extracting apparatus and the drum with material; (v) calculate a charged material weight according to a difference between the initial combined weight and the sensed progressing combined weight; and (vi) terminating the material extracting apparatus operation when a calculated charged material weight is within a predetermined range of the set point.

4. The silicone gum feed system (12) according to claim 1, wherein the controller (30) comprises a set of instructions to establish a material feed session set point range: to direct feeding a viscous material in the session by dicing a steadily moving material into a portion that drops sequantially into the processing system (10); to monitor a session total of material dropped into the processing system (10); to compare the session total of material to the session set point range: to increase a dicing rate of the moving material to decrease each diced portion quantity as the session set point range is approached; and to terminate the material feed of the session when the total material is within the session set point range.

5. A method of using a material extractor apparatus (16) in a silicone gum feed system according to claim 1 for controlling a viscous material feed to a processing system (10), comprising:
establishing a material feed session set point range;
feeding a viscous material in the session by dicing a steadily moving material into a portion that drops sequentially into the processing system (10);
monitoring a session total of material dropped into the processing system (10);
comparing the session total of material to the session set point range;
increasing a dicing rate of the moving material to decrease each diced portion quantity as the session set point range is approached; and
terminating the material feed of the session when the total material is within the session set point range.

6. The method according to claim 5, wherein the material extractor apparatus (16) comprises, comprising
dicing viscous material that is evacuated from the container for feed to a viscous material compounding process of the processing system (10) at a first rate and increasing the rate when the amount of viscous material charged to the compounding process attains a 16 pound range of a set point of material; or dicing viscous material that is evacuated from the container for feed to a viscous material compounding process of the processing system (10) at a first rate and increasing the rate when the amount of viscous material charged to the compounding process attains a predetermined range of a set point of material; and continuing dicing and charging material to the compounding process at a fasfer dicing rate to complete feed to the compounding process within a predetermined range of a set point of material; or
dicing viscous material that is evacuated from the container for feed to a viscous material compounding process of the processing system (10) at a first rate and increasing the rate when the amount of viscous material charged to the compounding process attains a predetermined range of a set point of material; and continuing dicing and charging material to the compounding process at a faster dicing rate to complete feed to the compounding process within a predetermined 2 pound range of a set point of material; or
evacuating viscous material from the container by driving a platen through a longitudinal axis of the container to express viscous feed material from the container; or
comprising evacuating viscous material from the container by driving a platen through a longitudinal axis of the container to express viscous feed material from the container to a feed tube (24) with a dicing apparatus (26) (26) to dice the viscous material to a compounding process of the processing system (10).

7. The method according to claim 5, comprising
referring to a look-up data base to determine the set point range for a material to be charged to the a compounding system (14) of the processing system (10); sensing an initial combined weight of a material extracting apparatus and a container with material;
signaling commencement of a material extracting apparatus operation to evacuate the material from the container;
sensing a progressing combined weight of the material extracting apparatus and the container with material;
calculating a charged material weight according to a difference between the initial combined weight and the sensed progressing combined weight; and terminating the material extracting apparatus operation when a calculated charged material weight is within a specified range of the set point.

8. The method according to claim 5,
wherein feeding viscous material and monitoring a session total comprises metering material at an exit end of a feed tube (24) that charges into the processing system (10); or
wherein feeding viscous material and monitoring a session total comprises metering material at an exit end of a feed tube (24) that charges into the processing system (10) at a first rate and increasing the rate of metering material as the quantity of viscous material fed to the processing system (10) is determined to approach a set point; or
wherein feeding viscous material and monitoring a session total comprises expressing viscous material from the container into a feed tube (24) of the feed system (12) and cutting material at an exit end of the feed tube (24) to dump cut material into the processing system (10); or
wherein feeding viscous material from the container and monitoring a session total comprises tamping viscous material from the container into a feed tube (24) of the feed system (12) and cutting material at an exit end of the feed tube (24) to dump into an auger of the processing system (10).

## Patentansprüche

1. Zuführungssystem für Silikongummi (12), umfassend eine Materialabziehvorrichtung (16), umfassend:
eine Trommelpresse, die an einer Gewichtsverlustswaage positioniert ist;
einen Zuführungsschlauch (24), der das Material aufnimmt, welches von der Trommel durch die Trommelpresse herausgepresst wird;
eine Trennvorrichtung (26), welche das Material vom Zuführungsschlauch (24) bis zum Verarbeitungssystem (10) nach dem durch die Waage wahrgenommenen Gewichtsverlust bemisst; und
eine Steuerung (30) mit Anweisungen, ein anfängliches Gewicht zu speichern, das weitere Gewicht zu überwachen, das Gewicht des Silikongummis, welches zum Verarbeitungssystem (10) hinzugeführt wird, durch die Differenz zwischen dem anfänglichen Gewicht und dem überwachten Gewicht zu bestimmen und die Trennrate des sich bewegenden Materials zu erhöhen, um jede abgetrennte Menge zu reduzieren, wenn der Sollwertbereich der Materialzuführungsvorganges erreicht ist.

2. Zuführungssystem für Silikongummi (12) gemäß Anspruch 1, wobei
die Trommelpresse einen Raum, um die Trommel aufzunehmen, und einen Kolben, welcher axial und gleitend in dem Raum angepasst ist, umfasst; oder
die Absaugungstrommelpresse einen Raum, um eine mit Material gefüllte Trommel aufzunehmen, und einen Kolben, welcher axial und gleitend in den Raum angepasst ist, umfasst, um das Material von der Trommel in den Zuführungsschlauch (24), welcher sich von dem Raum mit der Trennvorrichtung (26) erstreckt, heraus zu pressen; oder
die Trommelpresse einen Raum, um die Trommel aufzunehmen, und einen Kolben, welcher eine kolbengetriebenen Walze, welche axial und gleitend in den Raum angepasst ist, umfasst, umfasst;
oder
die Trennvorrichtung (26) an der Austrittsstelle des Zuführungsschlauches (24) positioniert ist und Schienen, welche gleitend einen Schneidedraht sichern, umfasst, um den Zuführungsschlauch (24) längs der Austrittsstelle zu durchkreuzen, um das Material, welches die Austrittsstelle des Zuführungsschlauches (24) verlässt, zu schneiden; oder
zusätzlich umfassend eine Steuerung (30), welche einen Kolben axial und gleitend innerhalb der Trommelpresse aktiviert, um das Material von einer Trommel, welche innerhalb der Trommelpresse aufgenommen ist, heraus zu pressen; oder
zusätzlich umfassend eine Steuerung (30) mit den Anweisungen, (I) den Eingabewert, welcher einen Materialsollwert darstellt, zu speichern, (II) ein anfängliches, kombiniertes Gewicht der Materialabziehvorrichtung und einer Trommel mit Material wahrzunehmen; (III) ein fortschreitendes, kombiniertes Gewicht der Materialabziehvorrichtung und der Trommel mit Material wahrzunehmen, während das Material von der Trennvorrichtung (26) bemessen wird; und (IV) ein Materialgewicht, welches vom Zuführungssystem (12) zu einem anschließenden Verfahren hinzu geführt wird, durch die Differenz zwischen dem anfänglichen, kombinierten Gewicht und dem wahrgenommenen fortschreitenden, kombinierten Gewicht zu berechnen; oder
zusätzlich umfassend eine Steuerung (30) mit den Anweisungen, (I) den Eingabewert, welcher einen Materialsollwert darstellt, zu speichern, (II) ein anfängliches, kombiniertes Gewicht der Materialabziehvorrichtung und einer Trommel mit Material wahrzunehmen; (III) ein fortschreitendes, kombiniertes Gewicht der Materialabziehvorrichtung und der Trommel mit Material wahrzunehmen, während das Material von der Trennvorrichtung (26) bemessen wird; (IV) ein Materialgewicht, welches vom Zuführungssystem (12) zu einem anschließenden Verfahren hinzu geführt wird, durch die Differenz zwischen dem anfänglichen, kombinierten Gewicht und dem wahrgenommenen fortschreitenden, kombinierten Gewicht zu berechnen; und den Betrieb der Materialabziehvorrichtung zu stoppen, wenn ein berechnetes, hinzugefügtes Materialgewicht innerhalb eines spezifizierten Bereichs des Sollwertes vorliegt; oder
zusätzlich umfassend eine Steuerung (30) mit den Anweisungen, (I) den Eingabewert, welcher einen Materialsollwert darstellt, zu speichern, (II) ein anfängliches, kombiniertes Gewicht der Materialabziehvorrichtung und einer Trommel mit Material wahrzunehmen; (III) ein fortschreitendes, kombiniertes Gewicht der Materialabziehvorrichtung und der Trommel mit Material wahrzunehmen, während das Material von der Trennvorrichtung (26) bemessen wird; (IV) ein Materialgewicht, welches vom Zuführungssystem (12) zu einem anschließenden Verfahren hinzu geführt wird, durch die Differenz zwischen dem anfänglichen, kombinierten Gewicht und dem wahrgenommenen fortschreitenden, kombinierten Gewicht zu berechnen; und (V) die Materialbemessungsrate der Trennungsvorrichtung (26) zu erhöhen, wenn ein berechnetes, honzugefügtes Materialgewicht innerhalb eines vorbestimmten Bereiches des Sollwertes vorliegt; oder
umfassend eine Vielzahl von Kombinationen aus Behälterabsaugung (22), Zuführungsschlauch (24) und Trennvorrichtung (26).

3. Zuführungssystem für Silikongummi (12) gemäß Anspruch 1, wobei die Steuerung (30) die Anweisungen beinhaltet: (I) sich auf eine Nachschlagen Datenbank zu beziehen, um einen Sollwert für ein Material, das einer Compoundierungsanlage (14) hinzugefügt werden soll, zu bestimmen; (II) ein anfängliches, kombiniertes Gewicht einer Materialabziehvorrichtung und einer Trommel mit Material wahrzunehmen; (III) den Beginn des Betriebs der Materialabziehvorrichtung zu melden, um Material von der Trommel abzusaugen; (IV) ein fortschreitendes, kombiniertes Gewicht der Materialabziehvorrichtung und der Trommel mit Material wahrzunehmen; (V) ein hinzugefügtes Materialgewicht durch die Differenz zwischen dem anfänglichen, kombinierten Gewicht und dem wahrgenommenen fortschreitenden, kombinierten Gewicht berechnen; und (VI) den Betrieb der Materialabziehvorrichtung zu beenden, wenn ein berechnetes hinzugefügtes Materialgewicht innerhalb eines vorbestimmten Bereichs des Sollwerts vorliegt.

4. Zuführungssystem für Silikongummi (12) gemäß Anspruch 1, wobei die Steuerung (30) Anweisungen umfasst, einen Sollwertbereich des Materialzuführungsvorganges einzuführen; die Zuführung eines viskosen Materials in den Vorgang durch das Trennen eines sich ständig bewegenden Materials in einen Anteil, der nacheinander in das Verarbeitungssystem (10) tropft, zu lenken; den Gesamtbetrag des Vorgangs des Materials, welches in das Verarbeitungssystem (10) getropft ist, zu überwachen; den Gesamtbetrag des Vorgangs des Materials mit dem Sollwertbereich des Vorgangs zu vergleichen; eine Trennungsrate des sich bewegenden Materials zu erhöhen, um jede abgetrennte Menge zu reduzieren, wenn der Sollwertbereich der Materialzuführungsvorganges erreicht ist; und den Materialzuführungsvorgang zu beenden, wenn das gesamte Material innerhalb des Sollwertbereiches des Vorgangs vorliegt.

5. Verfahren zur Verwendung eine Materialabziehvorrichtung (16) in einem Zuführungssystem für Silikongummi gemäß Anspruch 1 zur Steuerung einer Zuführung viskosen Materials zu einem Verarbeitungssystem (10), umfassend:
Einführung eines Sollwertbereiches des Materialzuführungsvorganges;
Zuführung eines viskosen Materials in den Vorgang durch Trennung eines sich ständig bewegenden Materials in einen Anteil, der nacheinander in das Verarbeitungssystem (10) tropft;
Überwachung eines Gesamtbetrages des Vorganges des Materials, welches in das Verarbeitungssystem (10) getropft ist;
Vergleich des Gesamtbetrages des Vorganges des Materials mit dem Sollwertbereich des Vorgangs;
Erhöhung einer Trennungsrate des sich bewegenden Materials, um jede abgetrennte Menge zu reduzieren, wenn der Sollwertbereich der Materialzuführungsvorganges erreicht ist; und
Beendung der Materialzuführung des Vorganges, wenn das gesamte Material innerhalb des Sollwertbereiches des Vorgangs vorliegt,

6. Verfahren gemäß Anspruch 5, wobei die Materialabziehvorrichtung (16) umfasst, umfassend
Trennung viskosen Materials, welches aus dem Behälter zur Zuführung zu einem Compoundierungsvertahren viskosen Materials des Verarbeitungssystems (10) bei einer ersten Rate abgezogen wird und Erhöhung der Rate, wenn die Menge an zum Compoundierunsgverfahren hinzugefügtem viskosen Material einen 15 Pfund Bereich des Sollwerts des Materials erreicht; oder
Trennung viskosen Materials, welches aus dem Behälter zur Zuführung zu einem Compoundierungsvertahren viskosen Materials des Verarbeitungssystems (10) bei einer ersten Rate abgezogen wird und Erhöhung der Rate, wenn die Menge an zum Compoundierunsgverfahren hinzugefügtem viskosen Material einen vorbestimmten Bereich des Sollwerts des Materials erreicht; und Fortsetzung der Trennung und Hinzufügen des Materials zum Compoundierungsverfahren bei einer schnelleren Trennungsrate, um die Zuführung zum Compoundierungsverfahren innerhalb eines vorbestimmten Bereichs des Sollwertes des Materials zu vervollständigen; oder
Trennung viskosen Materials, welches aus dem Behälter zur Zuführung zu einem Compoundierungsverfahren viskosen Materials des Verarbeitungssystems (10) bei einer ersten Rate abgezogen wird und Erhöhung der Rate, wenn die Menge an zum Compoundierunsgverfahren hinzugefügtem viskosen Material einen vorbestimmten Bereich des Sollwerts des Materials erreicht; und Fortsetzung der Trennung und Hinzufügen des Materials zum Compoundierungsverfahren bei einer schnelleren Trennungsrate, um die Zuführung zum Compoundierungsverfahren innerhalb eines vorbestimmten 2 Pfund Bereichs des Sollwertes des Materials zu vervollständigen; oder
Abziehen viskosen Materials aus einem Behälter durch Führungen einer Walze durch eine Längsachse des Behälters, um das viskose Zuführungsmaterial aus dem Behälter herauszupressen; oder
umfassend Abziehen viskosen Materials aus dem Behälter durch Führung einer Walze durch eine Längsachse des Behälters, um das viskose Zuführungsmaterial aus dem Behälter in einen Zuführungsschlauch (24) mit einer Trennungsvorrichtung (26) heraus zu pressen, um das Viskosematerial zu einem Compoundierungsvertahren des Verarbeitungssystems (10) zu trennen.

7. Verfahren gemäß Anspruch 5, umfassend
Bezugnahme auf eine Nachschlagedatenbank, um den Sollwertbereich für das Hinzufügen eines Materials in ein Compoundierungssystem (14) des Verarbeitungssystems (10) zu bestimmen;
Wahrnehmung eines anfänglichen, kombinierten Gewichts einer Materialabziehvorrichtung und eines Behälters mit Material;
Melden des Beginns des Betriebs der Materialabziehvorrichtung, um das Material aus dem Behälter abzuziehen;
Wahrnehmung eines fortschreitenden, kombinierten Gewichts der Materialabziehvorrichtung und des Behälters mit Material;
Berechnung eines hinzugefügten Materialgewichts durch die Differenz zwischen dem anfänglichen, kombinierten Gewicht und dem wahrgenommenen fortschreitenden, kombinierten Gewicht; und
Beendung des Betriebs der Materialabziehvorrichtung, wenn ein berechnetes hinzugefügtes Materialgewicht innerhalb eines spezifizierten Bereichs des Sollwerts vorliegt.

8. Verfahren gemäß Anspruch 5,
wobei das Zuführen viskosen Materials und Überwachen des Gesamtbetrages des Vorganges das Bemessen des Materials an einem Ausgangsende eines Zuführungsschlauches (24), das in das Verarbeitungssystem (10) hinzufügt, umfasst; oder
wobei das Zuführen viskosen Materials und Überwachen des Gesamtbetrages des Vorganges das Bemessen des Materials an einem Ausgangsende eines Zuführungsschlauches (24), das in das Verarbeitungssystem (10) hinzufügt, bei einer ersten Rate umfasst und die Erhöhung der Rate des bemessenen Materials als Menge des viskosen Materials, welches zum Verarbeitungssystem (10) hinzugeführt wird, bestimmt wird, um einen Sollwert zu erreichen; oder
wobei das Zuführen viskosen Materials und Überwachen des Gesamtbetrages des Vorganges das Herauspressen des viskosen Materials aus einem Behälter in einen Zuführungsschlauch (24) eines Zuführungssystems (12) und das Schneiden des Materials am Ausgangsende des Zuführungsschlauches (24), um das Material in das Verarbeitungssystem (1) fallenlassend zu schneiden, umfasst; oder
wobei das Zuführen viskosen Materials und Überwachen des Gesamtbetrages des Vorganges das Hinzustampfen viskosen Materials aus dem Behälter in einen Zuführungsschlauch (24) des Zuführungssystems (12) und das Schneiden des Materials am Ausgangsende des Zuführungsschlauches (24), um in eine Förderschnecke des Verarbeitungssystems (10) fallen gelassen zu werden, umfasst.

## Revendications

1. Système d'alimentation pour caoutchouc silicone (12) comprenant un appareil extracteur du matériel (16) comprenant :
une presse à tambour qui est située sur une échelle de perte de poids ;
un tube d'alimentation (24) qui reçoit du matériel qui est exprimé à partir d'un tambour par la presse à tambour ;
un appareil de découpe (26) qui fournit la dose du matériel à partir le tube d'alimentation (24) à un système de traitement (10) selon la perte de poids détectée par l'échelle ; et
un régulateur (30) ayant une série d'instructions pour stocker un poids initial,
pour surveiller un poids continuant, pour déterminer le poids de caoutchouc silicone alimenté au système de traitement (10) selon la différence entre le poids initial et le poids surveillé
et
faire augmenter le taux de découpe du matériel mouvant pour diminuer chacune quantité de portion découpée lorsque la gamme de point de consigne de la séance d'alimentation de matériel est atteinte.

2. Système d'alimentation pour caoutchouc silicone (12) selon la revendication 1 dans lequel
la presse à tambour comprend une chambre pour maintenir le tambour et un plongeur axial et coulissant qui est accommodé dans la chambre ; ou
la presse à tambour évacuateur comprend une chambre pour maintenir un tambour rempli de matériel et un plongeur axial et coulissant qui est accommodée dans la chambre pour exprimer du matériel à partir du tambour au tube d'alimentation (24) qui s'étend à partir de la chambre comprenant l'appareil de découpe (26) ; ou
la presse à tambour comprend une chambre pour maintenir le tambour et un plongeur comprenant une plaque actionnée par piston qui est accommodé dans la chambre de façon axiale et coulissante ; ou
l'appareil de découpe (26) est situé à une ouverture de décharge (24) et comprend des rails qui, de façon coulissante, attachent un fil de découpe pour qu'il traverse l'axe longitudinale du tube d'alimentation (24) à l'ouverture de décharge pour couper du matériel sortant par l'ouverture de décharge du tube d'alimentation (24) ; or
comprenant en outre un régulateur (30) qui fait démarrer un plongeur de façon axiale et coulissante dans la presse à tambour pour exprimer du matériel à partir d'un tambour maintenu dans la presse à tambour ; ou
comprenant en outre un régulateur (30) ayant une série d'instructions pour (I) stocker une valeur d'entrée représentant un point de consigne de matériel, (II) détecter un poids initial combiné de l'appareil d'extraction de matériel et d'un tambour avec du matériel ; (III) détecter un poids progressant combiné de l'appareil d'extraction de matériel et du tambour avec du matériel lorsque du matériel est dosé à partir l'appareil de découpe (26) ; et (iv) calculer un poids de matériel chargé à partir du système d'alimentation (12) à un procédé subséquent selon une différence entre le poids initial combiné et le poids progressant combiné détecté ; ou
comprenant en outre un régulateur (30) ayant une série d'instructions pour (I) stocker une valeur d'entrée représentant un point de consigne de matériel, (II) détecter un poids initial combiné de l'appareil d'extraction de matériel et d'un tambour avec du matériel ; (III) détecter un poids progressant combiné de l'appareil d'extraction de matériel et du tambour avec du matériel lorsque du matériel est dosé à partir de l'appareil de découpe (26) ; et (iv) calculer un poids de matériel chargé à partir du système d'alimentation (12) à un procédé subséquent selon une différence entre le poids initial combiné et le poids progressant combiné détecté ; et terminer l'opération de l'appareil d'extraction de matériel lorsque un poids de matériel chargé calculé est dans une gamme spécifiée du point de consigne ; ou
comprenant en outre un régulateur (30) ayant une série d'instructions pour (i) stocker une valeur d'entrée représentant un point de consigne de matériel, (ii) détecter un poids initial combiné de l'appareil d'extraction de matériel et d'un tambour avec du matériel ; (iii) détecter un poids progressant combiné de l'appareil d'extraction de matériel et du tambour avec du matériel lorsque du matériel est dosé à partir de l'appareil de découpe (26) ; et (iv) calculer un poids du matériel chargé à partir du système d'alimentation (12) à un procédé subséquent selon une différence entre le poids initial combiné et le poids progressant combiné détecté ; et (v) faire augmenter le taux de dosage de matériel par l'appareil de découpe (26) lorsque le poids de matériel chargé calculé est dans une gamme spécifiée du point de consigne ; ou
comprenant une pluralité de combinaisons d'evacuateuer-recipient (22), de tube d'alimentation (24) et de l'appareil de découpe (26).

3. Système d'alimentation pour caoutchouc silicone (12) selon la revendication 1 dans lequel le régulateur (30) contient une série d'instructions pour (I) faire référence à une base de données de référence pour déterminer un point de consigne pour un matériel à être chargé à un système de malaxage (14) ; (II) détecter un poids initial combiné d'un appareil d'extraction de matériel et d'un tambour avec du matériel ; (III) indiquer le début d'opération de l'appareil d'extraction de matériel pour évacuer du matériel à partir du tambour ; (iv) détecter un poids progressant combiné de l'appareil d'extraction de matériel et du tambour avec du matériel ; (v) calculer un poids de matériel chargé selon une différence entre le poids initial combiné et le poids progressant combiné détecté ; et (vi) terminer l'opération de l'appareil d'extraction de matériel lorsque un poids de matériel chargé calculé est dans une gamme prédéterminée du point de consigne.

4. Système d'alimentation pour caoutchouc silicone (12) selon la revendication 1 dans lequel le régulateur (30) comprend une série d'instructions pour établir une gamme de point de consigne pour la séance de l'alimentation de matériel ; pour diriger l'alimentation d'un matériel visqueux pendant la séance par le découpage d'un matériel mouvant régulièrement en une portion qui progressivement tombe dans le système de traitement (10) ; pour surveiller un totale de séance du matériel tombé dans le système de traitement (10) ; pour comparer un totale de séance du matériel à la gamme de point de consigne de la séance ; pour faire augmenter le taux de découpe du matériel mouvant pour diminuer chacune quantité de portion découpée lorsque la gamme de point de consigne de la séance est atteinte ; et pour terminer l'alimentation de matériel de la séance lorsque le matériel total est dans la gamme de point de consigne de la séance.

5. Méthode d'utilisation un appareil d'extraction du matériel (16) dans un système d'alimentation pour caoutchouc silicone selon la revendication 1 pour contrôler une alimentation de matériel visqueux à un système de traitement (10), comprenant les étapes suivantes :
établir une gamme de point de consigne pour la séance d'alimentation ;
alimenter un matériel visqueux pendant la séance par le découpage d'un matériel mouvant régulièrement en une portion qui progressivement tombe dans le système de traitement (10) ;
surveiller un total de matériel de la séance tombé dans le système de traitement (10) ;
comparer le total de matériel de la séance à la gamme de point de consigne de la séance ;
faire augmenter un taux de découpe du matériel mouvant pour diminuer chacune quantité de portion découpée lorsque la gamme de point de consigne de la séance est atteinte ; et
terminer l'alimentation de matériel de la séance lorsque le total du matériel est dans la gamme de point de consigne de la séance.

6. Méthode selon la revendication 5, dans laquelle l'appareil extracteur de matériel (16) comprend, comprenant les étapes suivantes:
découper du matériel visqueux qui vient d'être évacué à partir du récipient pour l'alimentation à un procédé de malaxage de matériel visqueux du système de traitement (10) à un premier taux et augmenter le taux lorsque la quantité du matériel visqueux chargée au procédé de malaxage atteint une gamme de 15 pound d'un point de consigne de matériel ; ou
découper du matériel visqueux qui vient d'être évacué à partir du récipient pour l'alimentation à un procédé de malaxage de matériel visqueux du système de traitement (10) à un premier taux et faire augmenter le taux lorsque la quantité du matériel visqueux chargée au procédé de malaxage atteint une gamme prédéterminée d'un point de consigne de matériel ;
et continuer à découper et à charger du matériel au procédé de malaxage à un taux de découpe plus rapide pour terminer l'alimentation au procédé de malaxage dans une gamme prédéterminée d'un point de consigne de matériel ; ou
découper du matériel visqueux qui vient d'être évacué à partir du récipient pour l'alimentation à un procédé de malaxage de matériel du système de traitement (10) à un premier taux et faire augmenter le taux lorsque la quantité du matériel visqueux chargé au procédé de malaxage atteint une gamme prédéterminée d'un point de consigne de matériel ;
et continuer à découper et à charger du matériel au procédé de malaxage à un taux de découpe plus rapide pour terminer l'alimentation au procédé de malaxage dans une gamme prédéterminée de 2 pound d'un point de consigne de matériel ; ou
évacuer du matériel visqueux à partir du récipient par pousser une plaque à travers une axe longitudinale du récipient pour exprimer du matériel d'alimentation visqueux à partir du récipient ; ou
comprenant l'étape d'évacuer du matériel visqueux à partir du récipient par pousser une plaque à travers une axe longitudinale du récipient pour exprimer du matériel d'alimentation visqueux à partir du récipient à un tube d'alimentation (24) par un appareil de découpe (26) pour découper le matériel visqueux pour un procédé de malaxage du système de traitement (10).

7. Méthode selon la revendication 5, comprenant les étapes suivantes
(I) faire référence à une base de données de référence pour déterminer la gamme de point de consigne pour un matériel à être chargé au système de malaxage (14) du système de traitement (10) ;
détecter un poids initial combiné d'un appareil d'extraction de matériel et d'un récipient avec du matériel ;
indiquer le début d'une opération de l'appareil d'extraction de matériel pour évacuer le matériel à partir du récipient ;
détecter un poids progressant combiné de l'appareil d'extraction de matériel et du récipient avec du matériel ;
calculer un poids de matériel chargé selon une différence entre le poids initial combiné et le poids progressant combiné détecté ; et
terminer l'opération de l'appareil d'extraction de matériel lorsqu'un poids de matériel chargé calculé est dans une gamme spécifiée du point de consigne.

8. Méthode selon la revendication 5,
dans laquelle les étapes d'alimenter du matériel visqueux et de surveiller un total de séance comprend l'étape de doser du matériel à une extrémité de sortie d'un tube d'alimentation (24) qui donne des charges au système de traitement (10) ; ou
dans laquelle les étapes d'alimenter du matériel visqueux et de surveiller un total de séance comprend l'étape de doser du matériel à une extrémité de sortie d'un tube d'alimentation (24) qui donne des charges au système de traitement (10) à un premier taux et l'étape de faire augmenter le taux de doser du matériel lorsque la quantité de matériel visqueux alimentée au système de traitement (10) est déterminée tel qu'elle atteint un point de consigne ; ou
dans laquelle les étapes d'alimenter du matériel visqueux et de surveiller un total de séance comprend l'étape d'exprimer du matériel visqueux à partir du récipient dans un tube d'alimentation (24) du système d'alimentation (12) et de couper du matériel à une extrémité de sortie du tube d'alimentation (24) pour décharger du matériel coupé vers le système de traitement (10 ; ou
dans laquelle l'étape d'alimenter du matériel visqueux à partir d'un récipient et l'étape de surveiller un total de séance comprend l'étape de tasser du matériel visqueux à partir du récipient dans un tube d'alimentation (24) du système d'alimentation (12) et de couper du matériel à une extrémité de sortie du tube d'alimentation (24) pour décharger vers une tarière du système de traitement (10).
